(19) Europäisches Patentamt
European Patent Office
Office européen des brevets

(11) **EP 2 014 693 B1**

(12) **EUROPÄISCHE PATENTSCHRIFT**

(45) Veröffentlichungstag und Bekanntmachung des Hinweises auf die Patenterteilung:
**18.05.2011  Patentblatt 2011/20**

(51) Int Cl.:
*C08G 18/44* *(2006.01)*    *C08G 18/10* *(2006.01)*

(21) Anmeldenummer: **08011759.1**

(22) Anmeldetag: **28.06.2008**

(54) **Polyurethan- und Polyurethanharnstoffelastomere auf Basis von Polycarbonatpolyolen**

Polyurethane and polyurethane urea elastomers  based on polycarbonate polyoles

Elastomère de polyuréthane et de polyuréthane-urée à base de polyols de polycarbonate

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.07.2007  DE 102007032343**

(43) Veröffentlichungstag der Anmeldung:
**14.01.2009  Patentblatt 2009/03**

(73) Patentinhaber: **Bayer MaterialScience AG
51368 Leverkusen (DE)**

(72) Erfinder:
• **Nefzger, Hartmut, Dr.
50259 Pulheim (DE)**
• **Barnes, James-Michael
53547 Breitscheid (DE)**
• **Schmidt, Manfred, Dr.
41540 Dormagen (DE)**
• **Krause, Jens, Dr.
51063 Köln (DE)**

(56) Entgegenhaltungen:
**DE-T2- 60 202 449**

• **H. TANAKA; M. KUNIMURA: "Mechanical Properties of Thermoplastic Polyurethanes Containing Aliphatic Polycarbonate Soft Segments With Different Chemical Structures" POLYMER ENGINEERING AND SCIENCE, Bd. 42, Nr. 6, Juni 2002 (2002-06), Seiten 1333-1349, XP002532590**

## Beschreibung

Die vorliegende Erfindung betrifft hochwertige Polyurethan (PUR)- und Polyurethanharnstoffelastomere, die in besonders anspruchsvollen Anwendungen einzigartige Kombinationen aus Verarbeitungsverhalten, Oxidationsstabilität, mechanisch und mechanisch-dynamischen Eigenschaften aufweisen und die auf Polycarbonatpolyolen basieren.

Polyurethanelastomere wurden vor über 60 Jahren erstmals basierend auf 1,5-Naphthalindiisocyanat (NDI; z.B. Desmodur® 15 von Bayer MaterialScience AG), einem langkettigen Polyesterpolyol und einem kurzkettigen Alkandiol unter dem Handelsnamen Vulkollan® von Bayer MaterialScience AG kommerzialisiert.

Als langkettige Polyole kommen neben Polyesterpolyolen auch Polyetherpolyole, Polycarbonatpolyole und Polyetheresterpolyole zum Einsatz. Die Wahl des langkettigen Polyols richtet sich hauptsächlich nach den Erfordernissen der jeweiligen Anwendung. Man spricht in diesem Zusammenhang auch von "maßgeschneiderten Eigenschaften". So werden z.B. Polyetherpolyole verwendet, wenn Hydrolysestabilität und Tieftemperatureigenschaften im Vordergrund stehen. Für Polyesterpolyole ergeben sich bezüglich der mechanischen Eigenschaften und UV-Stabilität gegenüber Polyetherpolyolen Vorteile. Nachteilig ist jedoch beispielsweise die geringe Mikrobenbeständigkeit. Polycarbonatpolyole kombinieren in gewisser Weise die Vorteile von Polyether-und Polyesterpolyolen, sind aber dazu im Vergleich relativ teuer.

Die Vorteile der Polycarbonatpolyole liegen insbesondere in ihrer UV-Stabilität, Hydrolysestabilität und ihrem mechanischen Eigenschaften.

Nachteilig an Polyester- und Polycarbonatpolyolen sowie an ihren Mischtypen, den Polyestercarbonatpolyolen, gegenüber den Polyetherpolyolen ist deren meist weniger vorteilhaftes Tieftemperaturverhalten. Dies ist strukturell bedingt und rührt von der erhöhten Polarität der Carbonylgruppen her, die normalerweise dazu führt, dass Polyester- und Polycarbonatpolyole teilkristallin sind, wohingegen Polyetherpolyole, insbesondere die Propylenoxid basierten Typen als kommerziell größte Gruppe, amorph sind. Mit der bekannten empirischen Regel von Beaman und Bayer (M.D. Lechner, K. Gehrke u. E.H. Nordmeier, Makromolekulare Chemie, Birkhäuser Verlag 1993, S. 327)

$$T_g = 2/3 \ T_m \qquad\qquad (\ I\ )$$

wird für teilkristalline Systeme der Zusammenhang zwischen der Glasübergangstemperatur, ($T_g$) und der Schmelztemperatur, ($T_m$) verdeutlicht. Weisen beispielsweise Polycarbonatpolyole Schmelztemperaturen der teilkristallinen Anteile von ca. 70°C (343K) auf, so liegen die Glasübergangstemperaturen der amorphen Bereiche in der Größenordnung von - 43°C (230 K). Diese Werte gelten weitgehend auch dann, wenn die Polycarbonatpolyole als Weichsegmentpolyole in segmentierten Multiblockcopolyurethanen, z.B. in Form von thermoplastischen Polyurethanelastomeren (TPU) oder Polyurethangießelastomeren in eingebauter Form vorliegen. Hieraus wird deutlich, dass es wünschenswert ist, Polycarbonatpolyole zur Verfügung zu stellen, die einen möglichst niedrigen Schmelzbereich aufweisen. Zum einen wird dadurch die Verarbeitung erleichtert und zum anderen wird der Gebrauchstemperaturbereich in Folge der dann ebenfalls abgesenkten Glasübergangstemperatur zu tieferen Temperaturen hin erweitert.

Der Bereich der Gebrauchstemperatur wird nach oben hin durch das thermische Verhalten der Hartsegmente (z.B. Urethan-, Harnstoff-, Isocyanurat-Gruppen etc.), d.h. der Strukturelemente, die in den Polyisocyanatbausteinen vorliegen, begrenzt.

Nachteilig am Einsatz von 1,6-Hexandiol als Diolkomponente für beispielsweise Polycarbonat-oder Polyadipatpolyole, wie sie in der Polyurethanchemie Verwendung finden, ist die erhöhte Viskosität bei ansonsten identischen Kenngrößen (Molekulargewicht und Funktionalität).

Es hat nicht an Versuchen gefehlt, den Schmelzbereich des für Polyurethanelastomere technisch wichtigsten Polycarbonatpolyols, des Hexandiolpolycarbonatpolyols, so zu modifizieren, dass spezielle Anforderungen möglichst vieler Anwendungen abgebildet werden können. In DE-A 3717060 wird beispielweise Hexandiol teilweise z.B. durch Hexandiolethereinheiten ersetzt, mit der Folge eines gegenüber reinem Hexandiolpolycarbonatpolyol verminderten kristallinen Anteils und eines zu tieferen Temperaturen hin verschobenen Schmelzbereiches. Nachteilig an diesem Verfahren ist jedoch, dass der Einbau von Ethergruppierungen die Oxidations- und Wärmealterungsbeständigkeit negativ beeinflusst und somit wichtige Anwendungen nicht zugänglich sind.

H. Tanaka und M. Kunimura (Polymer Engineering and Science, Vol. 42, No. 6, S. 1333, (2002)) weisen einen Weg auf, der zumindest den vorgenannten Nachteil beseitigt, indem Copolycarbonatpolyole aus 1,6-Hexandiol und 1,12-Dodecandiol hergestellt werden, die deutlich gegenüber ihren Homopolycarbonatpolyolen abgesenkte Schmelztemperaturen aufweisen. Mit der verwendeten Messmethodik bestimmten sie den Schmelzpunkt von Hexandiolpolycarbonatpolyol zu 47,4°C und von 1,12-Dodecanpolycarbonatpolyol zu 65,5°C, während ein Copolycarbonatpolyol mit einer Zusammensetzung von 70 Gew.-Tle. Hexandiol : 30 Gew.-Tle. 1,12-Dodecandiol bei 29,1°C aufschmilzt, somit eine Absenkung des Schmelzbereiches von 18,3 °C bzw. 36,3°C gegenüber den Homopolymeren vorliegt. In ähnlicher Weise verhalten sich auch die Schmelzwärmen [J/g], die dann ein Minimum aufweisen, wenn das Polycarbonatpolyol aus 70 Tln. Hexandiol und 30 Tln. 1,12-Dodecandiol aufgebaut ist.

Trotz dieser im Prinzip vielversprechenden Ansätze, die im übrigen auch auf daraus aufgebaute thermoplastische Polyurethanelastomere angewendet wurden, konnte sich dieser Weg bislang nicht oder zumindest nicht in nennenswertem Umfang technisch umsetzen lassen.

Ein wesentlicher Grund hierfür ist, dass insbesondere 1,12-Dodecandiol preislich so ungünstig ist, dass der dadurch resultierende Preis des Polycarbonatpolyols bzw. Copolycarbonatpolyols und damit letztendlich des Polyurethanelastomeren so hoch wird, dass die Vorteile, die sich durch Verwendung bzw. Mitverwendung von 1,12-Dodecandiol ergeben können, überkompensiert werden.

Dies bedeutet, dass die evtl. technischen Vorteile zu teuer erkauft werden müssten.

Aufgabe der vorliegenden Anmeldung war es daher, Polyurethane zur Verfügung zu stellen, die die vorgenannten Nachteile nicht aufweisen.

Gegenstand der Erfindung sind Polycarbonatpolyole mit einer OH-Zahl von 50 bis 80 mg KOH/g und einer mittleren Funktionalität von 1,9 bis 2,2 erhältlich durch Umsetzung eines Gemisches aus

A) $\alpha$, $\omega$-Alkandiolen mit 4 bis 8 C-Atomen,

B) technischem Dodecandiol, wobei das technische Dodecandiol 30-50 Gew.-% 1,12-Dodecandiol, 5-20 Gew.-% Diole mit weniger als 10 C-Atomen und keine Diole mit mehr als 12 C-Atomen aufweist und das technische Dodecandiol in einer Menge von 15 Gew.-% bis 85 Gew.-%, bezogen auf das Gemisch aus A) und B), vorliegt, und

C) 0 bis 10 Gew.-%, bezogen auf das Gesamtgemisch aus A), B) und C), Alkanolen mit 4 bis 10 Kohlenstoffatomen und Hydroxylfunktionalitätenvon 1 bis 3

mit einer Carbonylkomponente aus der Gruppe bestehend aus Diarylcarbonaten, Dialkylcarbonaten und $COCl_2$.

Die Molmasse des Polycarbonatpolyols liegt erfindungsgemäß im Bereich von 1200 bis 2500 Da. Die bei 75°C gemessene Viskosität der Polycarbonatpolyole liegt zwischen 900 und 2600 mPas. Die mittlere Funktionalität liegt im Bereich von 1,9 bis 2,2. Dies wird dadurch erreicht, dass man zusätzlich ggf. Monoole oder Polyole zusetzt. Beispiele für Polyole sind in diesem Zusammenhang 1,1,1-Trimethylolpropan und für Monoole 1-Octanol. Funktionalitäten unter 2 können auch dadurch erhalten werden, dass die eingesetzten Dialkyl- und Diarylcarbonate nicht vollständig abreagieren, so dass Alkylcarbonato- bzw. Arylcarbonato-Endgruppen entstehen.

Die Umsetzung der Komponenten A), B) und ggf. C) mit der Carbonylkomponente erfolgt nach den dem Fachmann bekannten Verfahren. Es können Phosgen, Dialkyl- und Diarylcarbonate eingesetzt werden. Bevorzugt sind hierbei Dimethyl- und Diphenylcarbonat.

Die erfindungsgemäßen Polycarbonatpolyole können anschließend vorzugsweise über eine Prepolymerstufe zu Polyurethan-Werkstoffen (PUR) weiterverarbeitet werden, indem die erfindungsgemäßen Polycarbonatpolyole, ggf. unter Mitverwendung von kurzkettigen organischen Verbindungen mit Hydroxyl- und/oder Aminoendgruppen und/oder Wasser, mit Polyisocyanaten, vorzugsweise Diisocyanaten umgesetzt werden.

Ein weiterer Gegenstand der Erfindung sind NCO-Prepolymere mit einem NCO-Gehalt von 3 bis 15 Gew.-% erhältlich durch Umsetzung von erfindungsgemäßen Polycarbonatpolyolen und Polyisocyanaten aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), Gemische aus 2,4'- und 4,4'-MDI sowie carbodümid-/uretonimin-modifizierten MDI-Derivaten und höherkernigen Homologen der Diphenylmethan-Reihe, Diisocyanattoluole, Hexamethylendiisocyanat, Isophorondiisocyanat im molaren Überschuss (bevorzugt in einem Verhältnis von NCO- zu OH-Gruppen von 2:1 bis 10:1).

Ein weiterer Gegenstand der Erfindung sind Polyurethanelastomere bzw. Polyurethanharnstoff elastomere erhältlich durch Umsetzung von erfindungsgemäßen NCO-Prepolymeren mit (i) aliphatischen Diolen mit primären Hydroxylgruppen und zahlenmittleren Molekulargewichten von 62 bis 202 und gegebenenfalls in geringen Mengen von 0-10 Gew.-%, bezogen auf die aliphatischen Diole, Verbindungen aus der Gruppe bestehend aus kurzkettigen Polyolen mit Funktionalitäten >2 bis 4 und höhermolekularen Polyolen mit einer Funktionalität von 2 und erfindungsgemäßen Polycarbonatpolyolen oder (ii) mit aromatischen diaminischen Kettenverlängerern aus der Gruppe bestehend aus 4,4'-Methylen-bis-(2-chloroalinin) (MBOCA), 3,3', 5,5'-Tetraisopropyl-4,4'-diaminodiphenylmethan, 3,5-Dimethyl-3'.5'-diisopropyl-4,4'-diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin oder 3,5-Diamino-4-chlorobenzoesäure-isobutylester in Anwesenheit von gegebenenfalls Wasser und gegebenenfalls weiteren Hilfs- und Zusatzstoffen.

Bevorzugt werden als aliphatische Diole Butandiol, Hexandiol, Cyclohexandiol, 2,2'-Thiodiethanol oder Mischungen davon eingesetzt.

Bei Einsatz von Wasser als Kettenverlängerer und/oder als Treibmittel weisen die Polyurethanelastomere bevorzugt Dichten von 0,3 bis 0,9 g/cm$^3$ auf.

Die Polyurethan- und die Polyurethanharnstoffelastomere werden bevorzugt nach dem Gießverfahren hergestellt, wobei man im Wesentlichen zwei Prozesse unterscheidet: Zum einen das NCO-Prepolymerverfahren, bei dem langkettiges Polyol und stöchiometrisch überschüssiges Polyisocyanat zu einem NCO-Gruppen aufweisenden Prepolymer umgesetzt werden und dann mit einer kurzkettigen organischen Verbindung mit Hydroxyl- oder Aminoendgruppen und/oder Wasser kettenverlängert wird. Zum anderen können PUR-Gießelastomere auch nach dem one-shot-Verfahren hergestellt werden, bei dem langkettiges Polyol und kurzkettige organische Verbindungen mit Hydroxyl- oder Aminoendgruppen und/oder Wasser gemischt werden und dann mit Polyisocyanat umgesetzt werden.

Aus den erfindungsgemäßen Polycarbonatpolyolen können neben Polyurethan-Gießelastomeren auch thermoplastisch verarbeitbare Polyurethanelastomere nach den dem Fachmann bekannten Verfahren hergestellt werden.

Zusätzlich zu den erfindungsgemäß eingesetzten Komponenten können bei der Herstellung der Polyurethan- oder Polyurethanharnstoffelastomere die üblichen Katalysatoren und Hilfsmittel verwendet werden.

Beipiele für Katalysatoren sind Trialkylamine, Diazabicyclooctan, Zinn-dioctoat, Dibutylzinndilaurat, N-Alkylmorpholin, Blei-, Zink-, Kalzium-, Magnesiumoctoat, die entsprechenden Naphthenate, p-Nitrophenolat.

Beispiele für Stabilisatoren sind Broenstedt- und Lewis-Säuren, z.B. Salzsäure, Benzoylchlorid, Organomineralsäuren, z.B. Dibutylphosphat, weiterhin Adipinsäure, Äpfelsäure, Bernsteinsäure, Traubensäure oder Zitronensäure.

Beispiele für UV-Schutzmittel und Hydrolyseschutzmittel sind beispielsweise 2,6-Dibutyl-4-methylphenol und Carbodiimide.

Einbaufähige Farbstoffe, die ebenfalls eingesetzt werden können, sind solche, die über Zerewitinoff aktive Wasserstoffatome verfügen, die mit NCO-Gruppen abreagieren können.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2nd edition, Carl Hanser Verlag, München, 1994, Kap. 3.4. enthalten.

Die Verwendung der erfindungsgemäßen Polyurethanelastomere liegt im Bereich technischer Bauteile, ist demzufolge äußerst vielfältig und umfasst beispielsweise Walzenbeschichtungen, Elektroverguss, Molche, Rakel, Räder, Rollen, Siebe, etc.

Die Erfindung soll anhand der nachfolgenden Beispiele näher erläutert werden.

### Beispiele

### Zusammenstellung der in den Beispielen verwendeten Rohstoffe

| | |
|---|---|
| T12DD: | technisches Dodecandiol der Fa. Invista (Homologengemisch gemäß Anspruch 1) |
| DPC: | Diphenylcarbonat der Fa. Bayer MaterialScience AG |
| Hexandiol: | 1,6-Hexandiol der Fa. Aldrich |
| 4,4'-MDI: | Desmodur® 44M der Fa. Bayer MaterialScience AG |
| 1,5-Naphthalindiisocyanat: | Desmodur® 15 der Fa. Bayer MaterialScience AG |
| Magnesiumhydroxidcarbonat: | als Pentahydrat der Fa. Aldrich |
| Dibutylphosphat: | Dibutylphosphat der Fa. Aldrich |
| Vernetzer RC 1604: | Vernetzer der Fa. Rheinchemie |
| Butandiol: | 1,4-Butandiol der Fa. Aldrich |
| Baytec® VPPU 0385 | Ethergruppen aufweisendes Polycarbonatpolyol der Fa. Bayer MaterialScience AG mit einer Hydroxylzahl von 56 mg KOH/g und einer Funktionalität von 2 |
| TMP: | 1,1,1-Trimethylolpropan der Fa. Aldrich |
| Vernetzer 10GE32: | Vernetzer der Fa. Bayer MaterialScience AG |
| Viskosimeter: | MCR S1 der Fa. Anton Paar |

Zur photometrischen Bestimmung von aromatischen Endgruppen (Phenoxy- und Phenylcarbonat) sowie freiem Phenol in Polycarbonatpolyolen wurde das Lambda 25 UVNis-Spektrometer der Fa. Perkin Elmer verwendet.

### A) Herstellung der Polycarbonatpolyole

Beispiel A3 (erfindungsgemäß):

In einer Destillationsapparatur wurden 2946 g (15,34 mol) T12DD, 1264 g (10,71 mol) Hexandiol (70 Gew.%

T12DD bezogen auf die Summe aus T12DD und Hexandiol) und 4952 g (23,14 mol) DPC sowie 160 mg Magnesiumhydroxidcarbonat für 90 Minuten unter Stickstoff und unter Rühren auf 180°C erhitzt. Danach wurde auf 110°C abgekühlt, Vakuum (15 mbar) angelegt und Phenol abdestilliert. Bei Verlangsamung der Phenoldestillation wurde die Sumpftemperatur in kleinen Schritten im Verlauf von 10 Stunden auf zuletzt 200°C erhöht, wobei die Kopftemperatur nicht über 80°C ansteigen darf. Für ca. 1 Stunde wurde bei 200°C und 15 mbar destilliert und für ca. eine weitere Std. bei 200°C und einem Druck unterhalb 1 mbar. Reste von Phenol wurden in dieser Phase mit einem Heißluftgebläse aus der Kolonne ausgetrieben. Nach Abkühlen auf ca. 80°C wurde eine Probe gezogen. Die OH-Zahl, die Endgruppen (photometrisch) und die Viskosität wurden bestimmt. Anschließend wurde durch Einrühren von 960 mg Dibutylphosphat bei 80°C neutralisiert.

OH-Zahl: 60 mg KOH/g

Viskosität: 1180 mPas (75°C)

Endgruppen: Phenol: 0,02 Gew.-%, Phenoxy- und Phenylcarbonat: nicht nachweisbar Die Versuche A1, A2 und A4 wurden entsprechend Beispiel A3 durchgeführt. Die Daten sind der Tabelle 1 zu entnehmen.

**Tabelle 1: Polycarbonatpolyole**

|  |  | A.1. (V) | A.2. | A.3. | A.4.(V) |
|---|---|---|---|---|---|
| Anteil T12DD | [Gew.-%] | 0 | 30 | 70 | 100 |
| OH-Zahl | [mg KOH/g] | 56,4 | 54,9 | 60,0 | 58,9 |
| Viskosität [75°C] | [mPas] | 2850 | 2180 | 1180 | 790 |
|  |  |  |  |  |  |
| (V) = Vergleich |  |  |  |  |  |

### B) Herstellung von MDI-Prepolymeren

Beispiel B3 (erfindungsgemäß):

In einem 6 1-Dreihalskolben, versehen mit einem Heizpilz, Rührwerk und Innenthermometer wurden 1850 g (7,4 Mol) 4,4'-MDI unter Stickstoffüberschleierung bei 50°C unter Rühren vorgelegt. Dann wurden 3001 g eines auf 80°C vorgewärmten Polycarbonatpolyols aus Beispiel A3 im Verlauf von ca. 10 Minuten unter Rühren zugegeben. Anschließend wurde bei 80°C unter Stickstoff weitergerührt. Nach 2 Stunden war die Reaktion beendet. Der NCO-Gehalt betrug 10,0 Gew.-% und die Viskosität 2050 mPas (bei 70°C).

Das NCO-Prepolymere wurde in einer Glasflasche bei Raumtemperatur gelagert und blieb über einen Zeitraum von über 3 Monaten flüssig und sedimentationsstabil.

Die Versuche B1, B2 und B4 wurden analog Beispiel B3 durchgeführt, wobei anstelle des Polycarbonatdiols A3 die Polycarbonatdiole A1, A2 und A4 eingesetzt wurden. Die Daten sind der Tabelle 2 zu entnehmen.

**Tabelle 2: NCO-Prepolymere auf Basis der Polycarbonatpolyole A1 - A4 mit NCO-Gehalten von 10 Gew.-%**

|  |  | B1 (V) | B2 | B3 | B4 (V) |
|---|---|---|---|---|---|
| Polycarbonatdiol |  | A1 (V) | A2 | A3 | A4 (V) |
| Viskosität (bei 70°C) | [mPas] | 4220 | 3180 | 2050 | 1447 |
| Kristallisationsstabil (bei RT) |  | Nein | Ja | Ja | Nein |
| Sedimentationsstabil (nach 3 Monaten und bei Raumtemperatur) |  | Nein*) | Nein | Ja | Nein*) |
| *) Diese Proben erstarren beim Stehen bei Raumtemperatur vollständig.<br>(V) = Vergleich |  |  |  |  |  |

Tabelle 2 zeigt, dass das Prepolymer B3, hergestellt aus dem erfindungsgemäßen Polycarbonatpolyol A3 besonders günstige Eigenschaften aufweist, d.h. eine Viskosität unterhalb 2500 mPas (70°C) und gute Kristallisations- und Sedimenationsstabilität bei Raumtemperatur hat. B2 ist durchaus noch gut brauchbar, weist aber eine höhere Viskosität als B3 auf. Bei den aus A1(V) und A4(V) hergestellten B1(V) und B4(V) bildet sich bei Raumtemperatur rasch ein Sediment, und im Laufe der Lagerung bei Raumtemperatur erstarren die beiden NCO-Prepolymere vollständig.

**C) Herstellung von Gießelastomeren**

**1) Kettenverlängerung mit 1,4-Butandiol**

100 Tle. eines auf 70°C vorgewärmten und entgasten Prepolymeren (aus Beispiel B)) wurden mit 10,15 Tln. 1,4-Butandiol 30 Sekunden verrührt. Die reagierende Schmelze wurde in 115°C heiße Metallformen gegossen und für 24 Std. bei 110°C nachgetempert. Nach 21 Tagen Lagerung bei Raumtemperatur wurden die mechanischen Daten bestimmt (Tabelle 3).

**2) Kettenverlängerung mit Vernetzer RC 1604**

100 Tle. eines auf 70°C vorgewärmten und entgasten Prepolymeren (aus Beispiel B)) wurden mit 26,5 Tln. Vernetzer RC 1604 (Vernetzertemperatur: 105°C) 30 Sekunden verrührt. Die reagierende Schmelze wurde in 115°C heiße Metallformen gegossen und für 24 Std. bei 110°C nachgetempert. Nach 21 Tagen Lagerung bei Raumtemperatur wurden die mechanischen Daten bestimmt (Tabelle 3).

**Tabelle 3: Herstellung und Eigenschaften von Polyurethan- und Polyurethanharnstoffelastomeren durch Umsetzung der MDI Prepolymere mit Butandiol oder Vernetzer 1604**

| | | | C1-1 (V) | C2-1(V) | C1-2 | C2-2 | C1-3 | C2-3 | C1-4(V) | C2-4(V) |
|---|---|---|---|---|---|---|---|---|---|---|
| | | | | | | | | | | |
| **Rezeptur:** | Prepolymer | | B1 (V) | B1 (V) | B2 | B2 | B3 | B3 | B4 (V) | B4 (V) |
| | MDI-Prepolymer | [Tle.] | 100 | 100 | 100 | 100 | 100 | 100 | 100 | 100 |
| | NCO-Gehalt Prep | [%] | 10,01 | 10,01 | 10 | 10 | 10,0 | 10 | 10,02 | 10,02 |
| | Viskosität (70°C) | [mPas] | 4220 | 4220 | 3180 | 3180 | 2050 | 2050 | 1447 | 1447 |
| | Vernetzer 1604 | [Tle] | - | 26,5 | - | 26,5 | - | 26,5 | - | 26,5 |
| | 1,4-Butandiol | [Tle.] | 10,15 | - | 10,15 | - | 10,15 | - | 10,15 | - |
| **Verarbeitung:** | Prepolymertemperatur | [°C] | 70 | 70 | 70 | 70 | 70 | 70 | 70 | 70 |
| | Vernetzertemperatur | [°C] | 23 | 105 | 23 | 105 | 23 | 105 | 23 | 105 |
| | Gießzeit | [s] | 125 | 28 | 130 | 48 | 120 | 40 | 135 | 43 |
| | Abhebezeit | [min] | 7 | 3 | 6 | 3 | 5 | 3 | 7 | 3 |
| | Tischtemperatur | [°C] | 116 | 116 | 116 | 116 | 116 | 116 | 116 | 116 |
| | Formtemperatur | [°C] | 110 | 110 | 110 | 110 | 110 | 110 | 110 | 110 |
| | Entformungszeit | [min] | 24 | 24 | 24 | 24 | 24 | 24 | 24 | 24 |
| **Mechanische Eigenschaften:** | | | | | | | | | | |
| DIN 53505 | Shore A | | 97 | 100 | 97 | 100 | 97 | 100 | 98 | 100 |
| DIN 53505 | Shore D | | 49 | 71 | 49 | 71 | 48 | 69 | 50 | 70 |
| DIN 53504 | Spannung 100% | [MPa] | 15,56 | 31,31 | 15,51 | 29,87 | 12,52 | 26,72 | 12,23 | 24,74 |
| DIN 53504 | Spannung 300% | [MPa] | 35,15 | - | 26,97 | - | - | - | - | - |
| DIN 53504 | Reißspannung | [MPa] | 37,91 | 40,67 | 27,63 | 37,58 | 14,76 | 32,89 | 12,86 | 29,56 |
| DIN 53504 | Reißdehnung | [%] | 364 | 186 | 351 | 171 | 205 | 205 | 201 | 212 |
| DIN 53515 | Graves | [kN/m] | 123 | 170 | 97 | 159 | 77 | 156 | 65 | 141 |
| | Stoßelastizität | [%] | 43 | 56 | 48 | 57 | 51 | 57 | 49 | 57 |

(fortgesetzt)

| Mechanische Eigenschaften: | | | | | | | | | | |
|---|---|---|---|---|---|---|---|---|---|---|
| DIN 53516 | Abrieb (DIN) | [mm³] | 23 | 44 | 23 | 52 | - | - | - | - |
| DIN 53420 | Dichte | [g/mm³] | 1,200 | 1,210 | 1,177 | 1,185 | - | - | - | - |
| DIN 53517 | DVR22°C | [%] | 18,3 | 59,6 | 18,3 | 58,9 | 21,9 | 65,1 | 29,2 | 63,4 |
| DIN 53517 | DVR 70°C | [%] | 33,0 | 82,9 | 38,9 | 86,0 | 43,3 | 84,5 | 47,8 | 85,4 |

**D) Herstellung von Gießelastomeren auf Basis von 1,5-Naphthalindiisocyanat**

93,3 Tle. eines auf 125°C vorgewärmten Polyols (aus Beispiel A3) wurden mit unterschiedlichen Mengen 1,5-Naphthalindiisocyanat (Desmodur® 15) verrührt, wobei bis zur Temperaturkonstanz ein Vakuum von ca. 15 mbar anlag. Danach wurden unterschiedliche Mengen an Kettenverlängerern für 30 Sekunden eingerührt. Die reagierende Schmelze wurde in 115°C heiße Metallformen gegossen und für 24 Std. bei 110°C nachgetempert. Nach 21 Tagen Lagerung bei Raumtemperatur wurden die mechanischen Daten bestimmt (Tabelle 4). Alle Mengenangaben sind Gewichtsangaben.

**E) Herstellung von Gießelastomeren (nicht erfindungsgemäß)**

Baytec® VPPU 0385 ist ein Handelsprodukt auf Basis 1,6-Hexandiol und Diphenylcarbonat.
Das Polycarbonatpolyol Baytec® VPPU 0385 wurde mit NDI zu einem NCO-Prepolymer umgesetzt und danach wurde mit 1,4-Butandiol eine Kettenverlängerung zum NDI-Gießelastomer durchgeführt. Die Herstellung erfolgte wie in Beispiel D) beschrieben. Es wurden 100 Gew.-Tle. Polycarbonatpolyol, 18 Gew.-Tle. NDI und 2 Gew.-Tle. 1,4-Butandiol eingesetzt.

**Tabelle 4: Herstellung und Eigenschaften von Gießelastomeren aus Basis Polyol A3 und NDI**

| Rezeptur: | | | D1 | D2 | D3 | D4 | D5 | D6 | D7 | D8 | D9 | D10 |
|---|---|---|---|---|---|---|---|---|---|---|---|---|
| | Polyol A3 | [Tle] | 93,3 | 93,3 | 93,3 | 93,3 | 93,3 | 93,3 | 93,3 | 93,3 | 93,3 | 93,3 |
| | Desmodur® 15 | [Tle] | 18 | 25 | 21 | 27 | 30 | 18 | 18 | 18 | 18 | 18 |
| | 1,4-Butandiol | [Tle] | 2 | 5 | 3,4 | 5,8 | - | 2 | 2,3 | 2 | 2,3 | 2,3 |
| | TMP | [%] | - | - | - | - | - | 10 | 20 | 30 | 40 | 60 |
| | Vernetzer 10GE32 | [Tle] | - | - | - | - | 9,5 | - | - | - | - | - |
| Verarbeitung:: | | | | | | | | | | | | |
| | Polyoltemperatur | [°C] | 122 | 125 | 126 | 130 | 133 | 122 | 122 | 122 | 122 | 122 |
| | Reaktionszeit | [min] | 10 | 9 | 7 | 8 | 7 | 10 | 10 | 9 | 11 | 10 |
| | Temperaturmaximum | [°C] | 132,8 | 128,5 | 126,5 | 127,9 | 127,1 | 129,4 | 129,1 | 129,4 | 130 | 128,7 |
| | Gießzeit | [s] | 105 | 35 | 60 | 25 | 165 | 105 | 105 | 110 | 180 | 190 |
| | Verfestigungszeit | [min] | 16 | 7 | 7 | 5 | 9 | 17 | 19 | 23 | 25 | 60 |
| | Tischtemperatur | f°C1 | 116 | 116 | 116 | 116 | 116 | 116 | 116 | 116 | 116 | 116 |
| | Formtemperatur | [°Cl | 110 | 110 | 110 | 110 | 110 | 110 | 110 | 110 | 110 | 110 |
| | Entformungszeit | [min] | - | - | - | - | - | - | - | - | - | - |
| | Nachheiztemperatur | [°C] | 110 | 110 | 110 | 110 | 110 | 110 | 110 | 110 | 110 | 110 |
| | Nachheizzeit | [h] | 24 | 24 | 24 | 24 | 24 | 24 | 24 | 24 | 24 | 24 |
| | Prepviskosität (120°C) | [mPas] | 4865 | 1625 | 2615 | 1310 | 1040 | - | - | - | - | - |
| Mechanische Eigenschaften: | | | | | | | | | | | | |
| DIN 53505 | Shore A | | 94 | 97 | 96 | 97 | 98 | 93 | 92 | 92 | 91 | 85 |
| DIN 53505 | Shore D | | 38 | 44 | 41 | 47 | 49 | 36 | 35 | 35 | 33 | 28 |
| DIN 53504 | Spannung 100% | CMPal | 8,70 | 13,62 | 10,85 | 13,97 | 14,68 | 8,13 3 | 7,82 | 7,56 | 7,06 | 5,52 |
| DIN 53504 | Spannung 300% | [MPa] | 16,09 | 19,03 | 15,84 | 19,09 | 19,38 | 15,27 | 15,20 | 15,58 | 16,70 | 16,63 |
| DIN 53504 | Reißspannung | [MPa] | 26,99 | 23,58 | 23,92 | 21,38 | 23,03 | 26,83 | 26,02 | 27,37 | 26,66 | 23,86 |

(fortgesetzt)

| Mechanische Eigenschaften: | | | | | | | | | | | |
|---|---|---|---|---|---|---|---|---|---|---|---|
| DIN53504 | Reißdehnung | [%] | 459 | 468 | 509 | 388 | 422 | 451 | 417 | 414 | 376 | 336 |
| DIN53515 | Graves | [kN/m] | 62 | 80 | 21 | 86 | 106 | 53 | 47 | 41 | 31 | 75 |
| | Stoßelastizität | [%] | 62 | 62 | 62 | 62 | 57 | 60 | 59 | 58 | 56 | 50 |
| DIN 53516 | Abrieb (DIN) | [mm$^3$] | 27 | 30 | 29 | 37 | 30 | 27 | 29 | 29 | 35 | 34 |
| DIN 53517 | DVR 22°C | [%] | 18,3 | 18,4 | 19,7 | 22,3 | 20,8 | 18,9 | 18,1 | 18,0 | 16,5 | 15,2 |
| DIN 53517 | DVR 70°C | [%] | 33,6 | 33,5 | 34,3 | 36,8 | 35,8 | 35,2 | 34,0 | 34,6 | 33,0 | 30,0 |
| DIN 53517 | DVR 100°C | [%] | 51,2 | 48,3 | 46,8 | 50,4 | 48,5 | 50,9 | 48,4 | 48,7 | 48,8 | 40,6 |
| DIN 53517 | DVR 120°C | [%] | 83,7 | 77,6 | 72,5 | 76,2 | 73,6 | 93,7 | 91,8 | 83,9 | 84,9 | 82,0 |

## F) Hydrolyse- und Heißluftalterung von NDI-Gießsystemen

Es konnte gezeigt werden, dass die erfindungsgemäßen Systeme bezüglich ihres Verhaltens gegenüber Hydrolyse und Heißluftalterung exzellente Eigenschaften aufweisen und konventionellen Systemen überlegen sind.

**Tabelle 5: Hydrolyseverhalten und Heißluftalterung (in Anlehnung an DIN 53508) des erfindungsgemäßen NDI-Gießelastomeren gemäß Beispiel D1)**

| Wasserlagerung bei 100°C | [Tage] | 0 | 7 | 14 | 21 | 42 | 56 | 63 |
|---|---|---|---|---|---|---|---|---|
| Shore A | | 94 | 91 | 90 | 90 | 91 | 92 | 92 |
| Spannung 100% | [MPa] | 8,70 | 6,10 | 6,03 | 5,26 | 6,22 | 6,17 | 6,29 |
| Spannung 200% | [MPa] | 11,71 | 8,19 | 7,72 | 7,15 | 7,27 | 7,45 | 7,22 |
| Spannung 300% | [MPa] | 16,09 | 10,10 | 9,13 | 8,72 | 7,60 | 8,07 | 7,61 |
| Reißspannung | [MPa] | 26,99 | 16,83 | 12,53 | 11,06 | 7,51 | 8,17 | 7,54 |
| Reißdehnung | [%] | 459 | 653 | 615 | 515 | 330 | 350 | 317 |
| | | | | | | | | |
| Luftlagerung bei 150°C | [Tage] | 0 | 7 | 14 | 21 | 42 | 56 | 63 |
| Shore A | | 94 | 96 | 91 | 89 | 89 | 90 | 87 |
| Spannung 100% | [MPa] | 8,70 | 6,63 | 6,08 | 5,69 | 5,57 | 5,75 | 5,69 |
| Spannung 200% | [MPa] | 11,71 | 8,30 | 7,75 | 7,56 | 7,39 | 7,43 | 7,45 |
| Spannung 300% | [MPa] | 16,09 | 9,74 | 9,33 | 9,33 | 9,17 | 8,97 | 8,85 |
| Reißspannung | [MPa] | 26,99 | 17,50 | 16,90 | 15,99 | 14,77 | 13,29 | 13,42 |
| Reißdehnung | [%] | 459 | 684 | 709 | 622 | 567 | 566 | 599 |

Tabelle 5 zeigt, dass das erfindungsgemäße NDI-Gießelastomer D1 auch höchsten Beanspruchungen standhält. Der stärkste Abfall der mechanischen Daten erfolgt ganz zu Anfang der Beanspruchung, also zwischen 0 und 7 Tagen. Dieses Verhalten ist jedoch typisch für derartige Tests. Ab diesem Zeitpunkt verändert sich das erfindungsgemäße System nur noch marginal und weist selbst bei einem Heißluftalterungstest bei 150°C über 9 Wochen bei den Spannungswerten 100, 200 und 300% nahezu konstante Werte auf. Ein vergleichbares, konventionelles System weist dagegen bereits nach 14 Tagen bei nur 130°C größeren Abfall in den mechanischen Daten auf (siehe Tabelle 6). Analog gilt dies auch hinsichtlich der Wasserlagerung.

**Tabelle 6: Hydrolyseverhalten und Heißluftalterung (in Anlehnung an DIN 53508) eines nicht erfindungsgemäßen NDI-Gießelastomeren gemäß Beispiel E)**

| Wasserlagerung bei 80°C | [Tage] | 0 | 3 | 14 | 28 |
|---|---|---|---|---|---|
| Shore A | | 89 | 88 | 87 | 87 |
| Spannung 100% | [MPa] | 5,4 | 5,8 | 4,9 | 4,9 |
| Spannung 300% | [MPa] | 9,5 | 10,2 | 8,4 | 8,1 |
| Reißspannung | [MPa] | 42,4 | 35,6 | 30,3 | 26,0 |
| Reißdehnung | [%] | 638 | 603 | 679 | 740 |
| | | | | | |

(fortgesetzt)

| Luftlagerung bei 130°C | [Tage] | 0 | 3 | 14 | |
|---|---|---|---|---|---|
| Shore A | | 89 | 87 | 85 | |
| Spannung 100% | [MPa] | 5,4 | 5,5 | 5,2 | |
| Spannung 300% | [MPa] | 9,5 | 8,6 | 8,0 | |
| Reißspannung | [MPa] | 42,4 | 29,2 | 22,7 | |
| Reißdehnung | [%] | 638 | 748 | 723 | |

**Patentansprüche**

1. Polycarbonatpolyole mit einer OH-Zahl von 50 bis 80 mg KOH/g und einer mittleren Funktionalität von 1,9 bis 2,2 erhältlich durch Umsetzung eines Gemisches aus

   A) $\alpha$, $\omega$-Alkandiolen mit 4 bis 8 C-Atomen,
   B) technischem Dodecandiol, wobei das technische Dodecandiol 30-50 Gew.-% 1,12-Dodecandiol, 5-20 Gew.-% Diole mit weniger als 10 C-Atomen und keine Diole mit mehr als 12 C-Atomen aufweist und das technische Dodecandiol in einer Menge von 15 Gew.-% bis 85 Gew.-%, bezogen auf das Gemisch aus A) und B), vorliegt, und
   C) 0 bis 10 Gew.%, bezogen auf das Gesamtgemisch aus A), B) und C), Alkanolen mit 4 bis 10 Kohlenstoffatomen und Hydroxylfunktionalitäten von 1 bis 3

   mit einer Carbonylkomponente aus der Gruppe bestehend aus Diarylcarbonaten, Dialkylcarbonaten und $COCl_2$.

2. NCO-Prepolymere mit einem NCO-Gehalt von 3 bis 15 Gew.-% erhältlich durch Umsetzung von Polycarbonatpolyolen gemäß Anspruch 1 und Polyisocyanaten aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), Gemische aus 2,4'- und 4,4'-MDI sowie carbodiimid-/uretonimin-modifizierten MDI-Derivaten und höherkernigen Homologen der Diphenylmethan-Reihe, Diisocyanattoluole, Hexamethylendiisocyanat, Isophorondiisocyanat im molaren Überschuss.

3. Polyurethanelastomere und Polyurethanharnstoffelastomere erhältlich durch Umsetzung von NCO-Prepolymeren gemäß Anspruch 2 und (i) aliphatischen Diolen mit primären Hydroxylgruppen und zahlenmittleren Molekulargewichten von 62 bis 202 und gegebenenfalls in geringen Mengen von 0-10 Gew.%, bezogen auf die aliphatischen Diole, Verbindungen aus der Gruppe bestehend aus kurzkettigen Polyolen mit Funktionalitäten >2 bis 4 und höhermolekularen Polyolen mit einer Funktionalität von 2 und Polycarbonatpolyolen gemäß Anspruch 1 in Anwesenheit von gegebenenfalls Wasser und gegebenenfalls weiteren Hilfs- und Zusatzstoffen oder (ii) aromatischen diaminischen Kettenverlängerem aus der Gruppe bestehend aus 4,4'-Methylen-bis-(2-chloroanilin) (MBOCA), 3,3',5,5'-Tetraisopropyl-4,4'-diaminodiphenylmethan, 3,5-Dimethyl-3',5'-diisopropyl-4,4'-diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin oder 3,5-Diamino-4-chlorobenzoesäure-isobutylester in Anwesenheit von gegebenenfalls Wasser und gegebenenfalls weiteren Hilfs- und Zusatzstoffen.

4. Verwendung der Polyurethan- und Polyurethanharnstoffelastomeren gemäß Anspruch 3 zur Herstellung technischer Bauteile.

**Claims**

1. Polycarbonate polyols having an OH number of 50 to 80 mg KOH/g and an average functionality of 1.9 to 2.2, obtainable by reacting a mixture of

   A) $\alpha$, $\omega$-alkanediols having 4 to 8 C atoms,
   B) technical dodecanediol, the technical dodecanediol comprising 30-50% by weight of 1,12-dodecanediol, 5-20% by weight of diols having less than 10 C atoms and no diols having more than 12 C atoms, and the technical dodecanediol being present in an amount of 15% by weight to 85% by weight, based on the mixture of A) and B), and

C) 0% to 10% by weight, based on the total mixture of A), B) and C), of alkanols having 4 to 10 carbon atoms and hydroxyl functionalities of 1 to 3

with a carbonyl component from the group consisting of diaryl carbonates, dialkyl carbonates and $COCl_2$.

**2.** NCO prepolymers having an NCO content of 3% to 15% by weight, obtainable by reacting polycarbonate polyols according to Claim 1 and polyisocyanates from the group consisting of 1,5-naphthaline diisocyanate, 2,4'-diphenylmethane diisocyanate (2,4'-MDI), 4,4'-diphenylmethane diisocyanate (4,4'-MDI), mixtures of 2,4'- and 4,4'-MDI, and carbodiimide-/uretonimine-modified MDI derivatives and higher polycyclic homologues of the diphenylmethane series, diisocyanatotoluenes, hexamethylene diisocyanate, isophorone diisocyanate in a molar excess.

**3.** Polyurethane elastomers and polyurethaneurea elastomers obtainable by reacting NCO prepolymers according to Claim 2 and (i) aliphatic diols having primary hydroxyl groups and number-average molecular weights of 62 to 202 and optionally in small amounts of 0-10% by weight, based on the aliphatic diols, compounds from the group consisting of short-chain polyols having functionalities > 2 to 4 and higher molecular weight polyols having a functionality of 2 and polycarbonate polyols according to Claim 1 in the presence of optionally water and optionally further auxiliaries and additives, or (ii) aromatic diaminic chain extenders from the group consisting of 4,4'-methylenebis (2-chloroaniline) (MBOCA), 3,3',5,5'-tetraisopropyl-4,4'-diaminodiphenylmethane, 3,5-dimethyl-3',5'-diisopropyl-4,4'-diaminophenylmethane, 3,5-diethyl-2,4-tolylenediamine, 3,5-diethyl-2,6-tolylenediamine (DETDA), 4,4'-methylene-bis(3-chloro-2,6-diethylaniline), 3,5-dimethylthio-2,4-tolylenediamine, 3,5-dimethylthio-2,6-tolylene-diamine or isobutyl 3,5-diamino-4-chlorobenzoate in the presence of optionally water and optionally further auxiliaries and additives.

**4.** Use of the polyurethane elastomers and polyurethane urea elastomers according to Claim 3 for producing technical components.

**Revendications**

**1.** Polycarbonate-polyols ayant un indice OH de 50 à 80 mg KOH/g et une fonctionnalité moyenne de 1,9 à 2,2, pouvant être obtenus par mise en réaction d'un mélange de

A) des α,□-alcanediols de 4 à 8 atomes C,
B) un dodécanediol technique, le dodécanediol technique comprenant 30 à 50 % en poids de 1,12-dodécanediol, 5 à 20 % en poids de diols de moins de 10 atomes C et aucun diol de plus de 12 atomes C et le dodécanediol technique étant présent en une quantité de 15 % en poids à 85 % en poids, par rapport au mélange de A) et B), et
C) 0 à 10 % en poids, par rapport au mélange total de A), B) et C), d'alcanols de 4 à 10 atomes de carbone et ayant des fonctionnalités hydroxyle de 1 à 3

avec un composant carbonyle du groupe constitué par les carbonates de diaryle, les carbonates de dialkyle et $COCl_2$.

**2.** Prépolymères NCO ayant une teneur en NCO de 3 à 15 % en poids, pouvant être obtenus par mise en réaction de polycarbonate-polyols selon la revendication 1 et de polyisocyanates du groupe constitué par le diisocyanate de 1,5-naphtaline, le diisocyanate de 2,4'-diphénylméthane (2,4'-MDI), le diisocyanate de 4,4'-diphénylméthane (4,4'-MDI), les mélanges de 2,4'- et 4,4'-MDI, ainsi que les dérivés de MDI modifiés par un carbodiimide/une uretone-imine et les homologues à nombre de noyaux supérieur de la série du diphénylméthane, les diisocyanatotoluènes, le diisocyanate d'hexaméthylène, le diisocyanate d'isophorone, en un excès molaire.

**3.** Élastomères de polyuréthane et élastomères de polyuréthane-urée pouvant être obtenus par mise en réaction de prépolymères NCO selon la revendication 2 et (i) de diols aliphatiques contenant des groupes hydroxyle primaires et ayant des poids moléculaires moyens en nombre de 62 à 202 et éventuellement en petites quantités de 0 à 10 % en poids, par rapport aux diols aliphatiques, de composés du groupe constitué par les polyols à chaîne courte ayant des fonctionnalités > 2 à 4 et les polyols de poids moléculaire supérieur ayant une fonctionnalité de 2 et de polycarbonate-polyols selon la revendication 1 en présence éventuellement d'eau et éventuellement d'adjuvants et additifs supplémentaires ou (ii) d'allongeurs de chaîne diaminiques aromatiques du groupe constitué par la 4,4'-méthylène-bis-(2-chloroaniline) (MBOCA), le 3,3',5,5'-tétraisopropyl-4,4'-diaminodiphénylméthane, le 3,5-diméthyl-3',5'-diisopropyl-4,4'-diaminophénylméthane, la 3,5-diéthyl-2,4-toluylènediamine, la 3,5-diéthyl-2,6-toluylènediamine (DETDA), la 4,4'-méthylène-bis-(3-chloro-2,6-diéthylaniline), la 3,5-diméthylthio-2,4-toluylènediamine, la 3,5-diméthylthio-2,6-toluylènediamine ou l'ester isobutylique de l'acide 3,5-diamino-4-chlorobenzoïque, en présence éventuellement d'eau et éventuellement d'adjuvants et additifs supplémentaires.

4. Utilisation des élastomères de polyuréthane et de polyuréthane-urée selon la revendication 3 pour la fabrication de composants techniques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3717060 A

**In der Beschreibung aufgeführte Nicht-Patentliteratur**

- **M.D. LECHNER ; K. GEHRKE U. ; E.H. NORDMEIER.** Makromolekulare Chemie. Birkhäuser Verlag, 1993, 327
- **H. TANAKA ; M. KUNIMURA.** *Polymer Engineering and Science,* 2002, vol. 42 (6), 1333
- **G. OERTEL.** Polyurethane Handbook. Carl Hanser Verlag, 1994